# EUROPEAN PATENT APPLICATION

(11) **EP 4 570 423 A1**
(43) Date of publication of application: **18.06.2025**
(21) Application number: 24815668.9
(22) Date of filing: 18.03.2024
(51) Int. Cl.: B23K 37/04, H01M 50/528, H01M 50/107, H01M 50/213, H01M 50/249, B23K 101/36

(54) **JIG USED FOR WELDING CYLINDRICAL BATTERY CELL, METHOD FOR MANUFACTURING CYLINDRICAL BATTERY CELL USING SAME, CYLINDRICAL BATTERY CELL PRODUCED ACCORDING TO METHOD, AND BATTERY PACK AND VEHICLE COMPRISING CYLINDRICAL BATTERY CELL**

(30) Priority: 31.05.2023 KR 20230070167
(71) Applicant: LG Energy Solution, Ltd., Seoul 07335 (KR)
(72) Inventor: PARK, Kyeong-Hoon, Daejeon 34122 (KR); LEE, Je-Jun, Daejeon 34122 (KR)
(74) Representative: Goddar, Heinz J.
(86) International application number: PCT/KR2024/003358
(87) International publication number: WO 2024/248289

(57) **Abstract**

Disclosed are a jig used for welding a cylindrical battery cell, a method of manufacturing a cylindrical battery cell using the same, a cylindrical battery cell manufactured thereby, and a battery pack and vehicle including the cylindrical battery cell.

A jig used for welding a cylindrical battery cell according to an embodiment of the present disclosure, which is a jig for welding a collector plate electrically connected to an electrode assembly of a cylindrical battery cell to a battery can, may include: a main body configured to come into contact with the collector plate to press the collector plate and having a through-hole for welding; and a position determination portion coupled to at least one of both ends of the main body to come into contact with an end of the collector plate, and configured to cause the collector plate to be fixed at a correct position during welding.

## Description

### TECHNICAL FIELD

The present application claims priority to Korean Patent Application No. 10-2023-0070167 filed on May 31, 2023 in the Republic of Korea, the disclosures of which are incorporated herein by reference.

The present disclosure relates to a jig used for welding a cylindrical battery cell, a method of manufacturing a cylindrical battery cell using the same, a cylindrical battery cell manufactured thereby, and a battery pack and vehicle including the cylindrical battery cell, and more specifically, it relates to a jig used for welding a cylindrical battery cell, which is able to improve welding quality and the stability of the battery cell, a method of manufacturing a cylindrical battery cell using the same, a cylindrical battery cell manufactured thereby, and a battery pack and vehicle including the cylindrical battery cell.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Current secondary batteries widely used include lithium-ion batteries, lithium-polymer batteries, nickel-cadmium batteries, nickel-hydrogen batteries, nickel-zinc batteries, and the like. The operating voltage of this unit secondary battery cell is approximately 2.5V to 4.5V.

Therefore, when an output voltage higher than this is required, a battery pack may be configured by connecting a plurality of battery cells in series. **In** addition, a battery pack may be configured by connecting multiple battery cells in parallel depending on the charge/discharge capacity required for the battery pack. Accordingly, the number and electrical connection of battery cells included in the battery pack may be configured in various ways depending on the required output voltage or charge/discharge capacity.

As types of secondary battery cells, cylindrical, prismatic, and pouch-type battery cells are known. The cylindrical battery cell is configured by winding a positive electrode and a negative electrode with an insulating separator interposed therebetween to form a jelly roll-type electrode assembly and then inserting the electrode assembly into a battery can with an electrolyte.

Although a conventional welding jig is used to weld a collector plate of the cylindrical battery cell to the battery can, since the collector plate moves left and right while being pressed by the welding jig, it is difficult to accurately align the center of the collector plate and the center of the jelly roll-type electrode assembly, resulting in welding defects due to the difference in welding position.

### DISCLOSURE

### Technical Problem

The present disclosure has been designed to solve the problems of the related art, and therefore the present disclosure is directed to providing a jig used for welding a cylindrical battery cell, which enables the collector plate to be fixed at a correct position when welding the collector plate and the battery can, thereby improving welding quality, a method of manufacturing a cylindrical battery cell using the same, a cylindrical battery cell manufactured thereby, and a battery pack and vehicle including the cylindrical battery cell.

### Technical Solution

According to one aspect of the present disclosure, there is provided a jig used for welding a cylindrical battery cell, which is a jig for welding a collector plate electrically connected to an electrode assembly of a cylindrical battery cell to a battery can, including: a main body configured to come into contact with the collector plate to press the collector plate and having a through-hole for welding; and a position determination portion coupled to at least one of both ends of the main body to come into contact with an end of the collector plate, and configured to cause the collector plate to be fixed at a correct position during welding.

In an embodiment, the battery can may include a beading portion formed to be compressed inward, and the collector plate may include a first portion in contact with the beading portion, a second portion in contact with the electrode assembly, and a third portion connecting the first portion and the second portion, and the main body may press the first portion of the collector plate such that the first portion of the collector plate comes into contact with the beading portion.

In an embodiment, the left-right length of a lower side of the main body may be configured to correspond to the left-right length of the first portion of the collector plate.

In an embodiment, the position determination portion may include at least one of a first position determination portion coupled to the left side of the main body and a second position determination portion coupled to the right side of the main body.

In an embodiment, a first protrusion may be formed in the first position determination portion so as to protrude downward further than the main body, and the first protrusion may come into contact with the left end of the first portion of the collector plate.

In an embodiment, the first position determination portion and the first protrusion formed in the first position determination portion may be spaced apart from the battery can.

In an embodiment, a second protrusion may be formed in the second position determination portion so as to protrude downward further than the main body, and the second protrusion may come into contact with the right end of the first portion of the collector plate.

In an embodiment, the second position determination portion may come into contact with the third portion of the collector plate.

In an embodiment, the beading portion may include a horizontal portion formed horizontally, and welding is performed while the first portion of the collector plate is seated on the horizontal portion of the beading portion.

In an embodiment, a round portion in a curved shape may be formed in at least a portion of the beading portion.

Meanwhile, according to another aspect of the present disclosure, there is provided a method of manufacturing a cylindrical battery cell using a jig, which includes: electrically connecting one side of a collector plate to an electrode assembly; pressing the collector plate using the above-described jig used for welding a cylindrical battery cell such that the collector plate comes into contact with the battery can; fixing the collector plate at a correct position by the jig; and welding the collector plate to the battery can through the jig.

**In** an embodiment, the jig may include: a main body having a through-hole for welding; and a position determination portion coupled to at least one of both ends of the main body and protruding from the main body, and the method may include: causing the main body to come into contact with the collector plate to press the collector plate; and causing the position determination portion to come into contact with an end of the collector plate so that the collector plate is fixed at a correct position during welding.

Meanwhile, according to another aspect of the present disclosure, there is provided a cylindrical battery cell manufactured by the method of manufacturing a cylindrical battery cell described above, a battery pack including the cylindrical battery cell described above, and a vehicle including the cylindrical battery cell described above.

### Advantageous Effects

The embodiments of the present disclosure have the effect of improving welding quality by ensuring that the collector plate is fixed at a correct position when welding the collector plate and the battery can.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a schematically cross-sectional view of a cylindrical battery cell manufactured by a cylindrical battery cell manufacturing method using a jig used for welding a cylindrical battery cell according to an embodiment of the present disclosure.
FIGS. 2 to 7 are diagrams illustrating a process for manufacturing a cylindrical battery cell using a jig used for welding a cylindrical battery cell according to an embodiment of the present disclosure.
FIG. 8 is a diagram schematically illustrating the configuration of a battery pack according to an embodiment of the present disclosure.
FIG. 9 is a diagram illustrating a vehicle including the battery pack in FIG. 8.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this document, the expression "one element is 'coupled' or 'connected' to the other element" should be understood that the elements may be directly coupled or connected to each other and that one element is indirectly coupled or connected to the other element through a connection member.

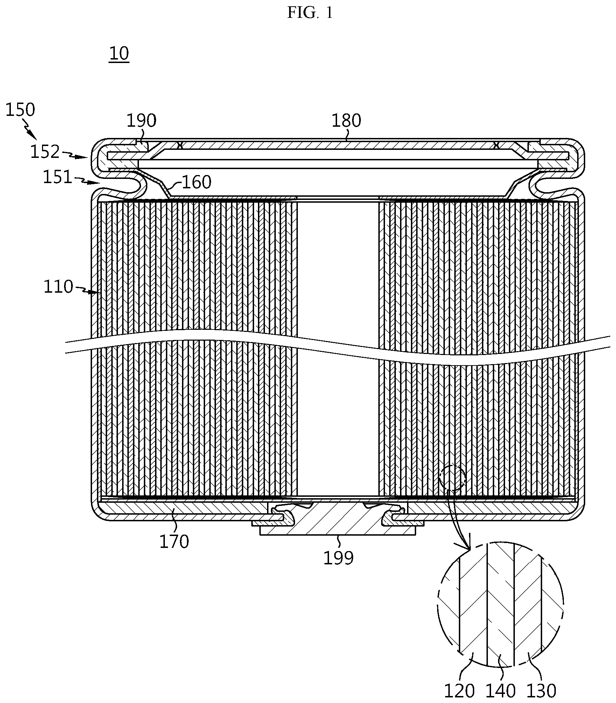

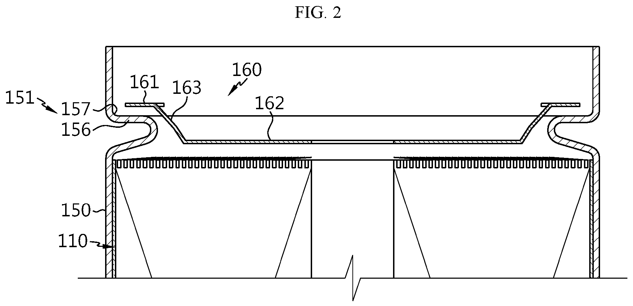

FIG. 1 is a schematically cross-sectional view of a cylindrical battery cell manufactured by a cylindrical battery cell manufacturing method using a jig used for welding a cylindrical battery cell according to an embodiment of the present disclosure, and FIGS. 2 to 7 are diagrams illustrating a process for manufacturing a cylindrical battery cell using a jig used for welding a cylindrical battery cell according to an embodiment of the present disclosure.

The jig used for welding a cylindrical battery cell according to an embodiment of the present disclosure enables the collector plate to be fixed at a correct position when welding the collector plate and the battery can. Hereinafter, this will be described in detail.

Referring to FIG. 1, a cylindrical battery cell 10 according to an embodiment of the present disclosure may be configured to include an electrode assembly 110, a battery can 150, a collector plate 160, and a cell terminal 199. The cylindrical battery cell 10 and details of configurations included in the cylindrical battery cell 10 will be described later.

The cylindrical battery cell 10 in FIG. 1 may include a collector plate 160, and the collector plate 160 may include a positive electrode collector plate electrically connected to a positive electrode plate 120 and a negative electrode collector plate electrically connected to a negative electrode plate 130. The collector plate 160 may be made of a conductive metal material.

Referring to FIG. 1, the collector plate 160 is in contact with a beading portion 151. Here, the collector plate 160 may be a positive electrode collector plate or a negative electrode collector plate.

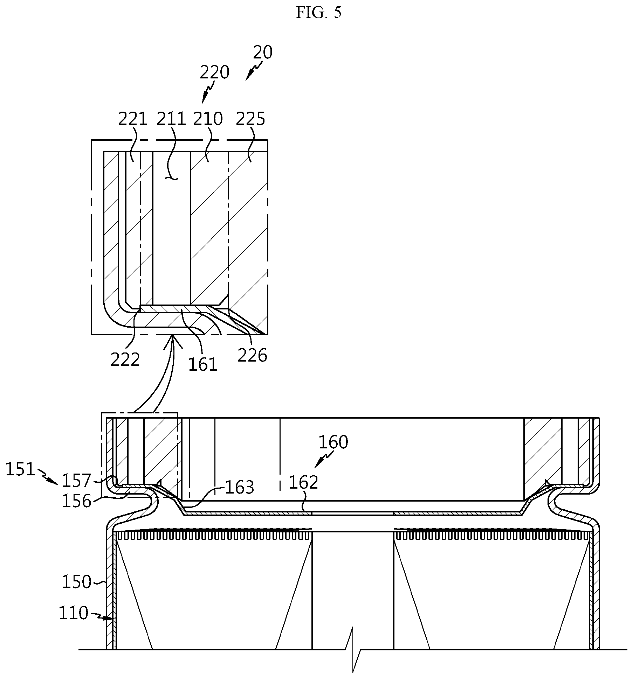

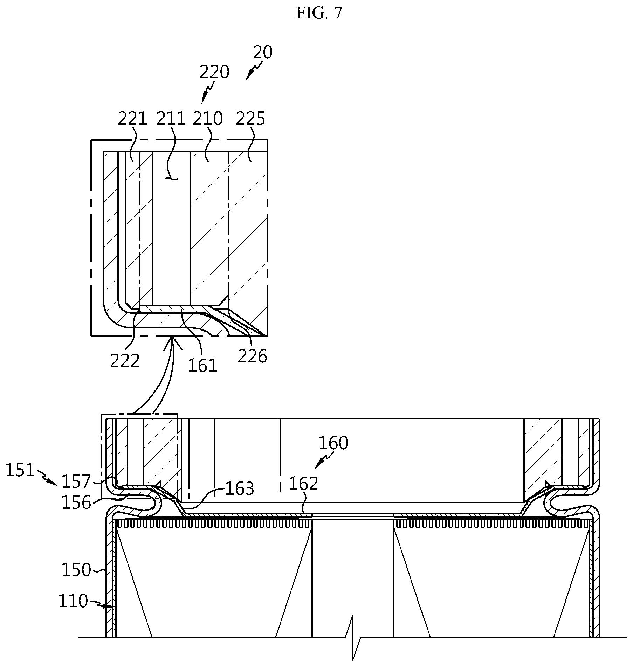

Referring to FIG. 2, the collector plate 160 may be configured to include a first portion 161, a second portion 162, and a third portion 163. Referring to FIG. 5, the first portion 161 may come into contact with the beading portion 151, for example, a horizontal portion 156 of the beading portion 151, and may be coupled to the horizontal portion 156 of the beading portion 151 by welding. Referring to FIGS. 1 and 7, a second portion 162 may be in contact with the electrode assembly 110 and electrically connected thereto. Referring to FIG. 2, the third portion 163 connects the first portion 161 and the second portion 162.

The beading portion 151 is formed by compressing the outer circumferential surface of the battery can 150 inward in an area adjacent to the opening of the battery can 150. The beading portion 151 may support the electrode assembly 110 such that the electrode assembly 110, which has a size approximately corresponding to the width of the battery can 150, does not come out through the opening of the battery can 150, and may also function as a support on which a cap plate 180 is seated. In addition, the beading portion 151 may support the outer circumferential surface of a sealing gasket 190. Details of the cap plate 180 and the sealing gasket 190 will be described later.

Referring to FIG. 2, a round portion 157 may be formed in a curved shape at least in a portion of the beading portion 151. The round portion 157 may be formed in the beading portion 151 in the manufacturing process of the cylindrical battery cell 10. The gap between the battery can 150 and the collector plate 160, which is formed by the round portion 157, more specifically, the gap between the round portion 157 of the battery can 150 and the first portion 161 of the collector plate 160 causes the collector plate 160 to move to the left and right of the beading portion 151.

As described above, if the collector plate 160 moves to the left and right of the beading portion 151, the center of the collector plate 160 may not algin with the center of the electrode assembly 110, and when radiating a laser beam for welding, it may be displaced out of laser radiation area, thereby causing penetration of the battery can 150 or local weakness thereof. As a result, there is a problem in which the welding quality of the cylindrical battery cell 10 is reduced. In addition, if the center of the collector plate 160 and the center of the electrode assembly 110 are misaligned, defects may occur in the cylindrical battery cell 10 itself, which may adversely affect the stability of the battery cell.

However, the jig 20 used for welding a cylindrical battery cell according to an embodiment of the present disclosure may prevent the left and right movement of the collector plate 160 such that the collector plate 160 is disposed at a correct position even if the round portion 157 is formed in the beading portion 151, thereby improving the quality of welding, ultimately preventing defects in the cylindrical battery cell 10, and improving stability thereof.

Meanwhile, even if the round portion 157 is not formed in the beading portion 151, processing errors, design tolerances, or the like may produce a gap between the battery can 150 and the collector plate 160, so the collector plate 160 may move due to the gap as described above. Even in this case, the jig 20 used for welding a cylindrical battery cell according to an embodiment of the present disclosure may prevent the left and right movement of the collector plate 160 to ensure that the collector plate 160 is disposed at a correct position.

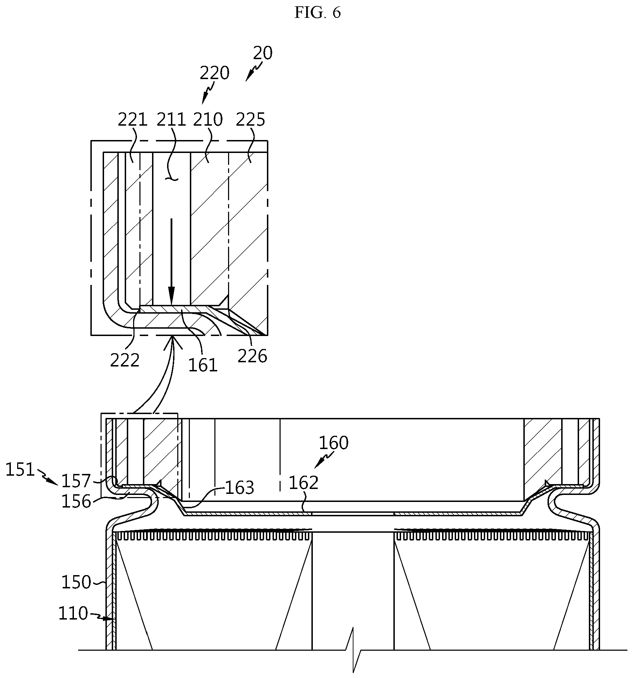

In addition, referring to FIG. 2, the beading portion 151 may include a horizontal portion 156 formed horizontally. However, the beading portion 151 may have various shapes, and does not necessarily have to be formed horizontally. However, in the case where the first portion 161 of the collector plate 160 is to be welded to the beading portion 151 of the battery can 150, it is advantageous for welding that the beading portion 151 includes the horizontal portion 156 formed horizontally as shown in FIGS. 2 to 4. However, the present disclosure is not limited thereto. In addition, as shown in FIG. 5, the first portion 161 of the collector plate 160 may be seated on the horizontal portion 156 of the beading portion 151, and then welding may be performed as indicated by the arrow in FIG. 6.

Referring to FIG. 1, one side of the collector plate 160 is electrically connected to the electrode assembly 110. In addition, the other side of the collector plate 160 is coupled to the battery can 150. Referring to FIG. 7, the first portion 161 of the collector plate 160 may be coupled to the horizontal portion 156 of the beading portion 151 of the battery can 150, and the collector plate 160 may be coupled to the beading portion 151 of the battery can 150 in various ways, for example, by welding as shown in FIG. 6 (see the arrow in FIG. 6). Specifically, for example, the collector plate 160 may be coupled to the beading portion 151 of the battery can 150 by laser welding. Hereinafter, the description will be made based on the case where the collector plate 160 is coupled to the beading portion 151 of the battery can 150 by laser welding. However, the coupling of the collector plate 160 is not limited to laser welding.

Here, the jig 20 is used to weld the collector plate 160 to the beading portion 151 of the battery can 150. The jig 20 used for welding a cylindrical battery cell according to an embodiment of the present disclosure is a jig 20 used to weld the collector plate 160 to the battery can 150, and may be configured to include a main body 210 and a position determination portion 220.

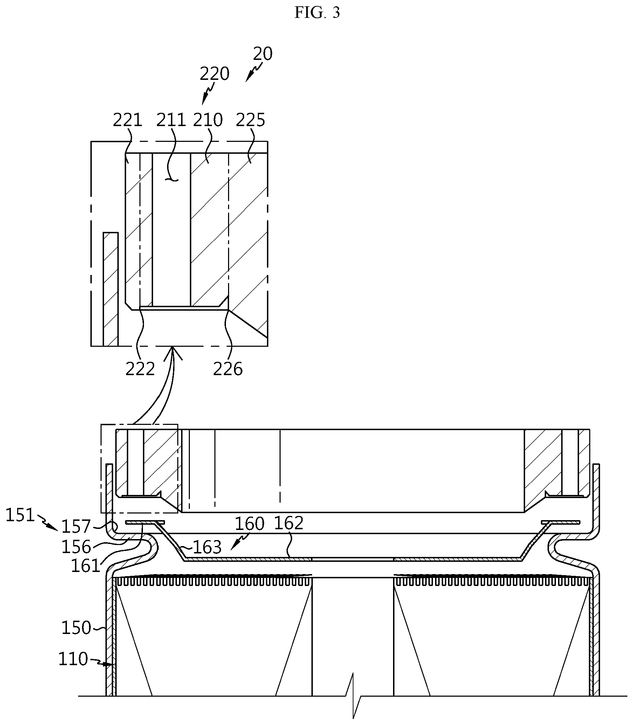

Referring to FIG. 3, although the main body 210 and the position determination portion 220 are separated by an alternated long and short dash line for convenience of explanation, the main body 210 and the position determination portion 220 may be manufactured as one piece, or may be manufactured separately so as to be assembled and dissembled.

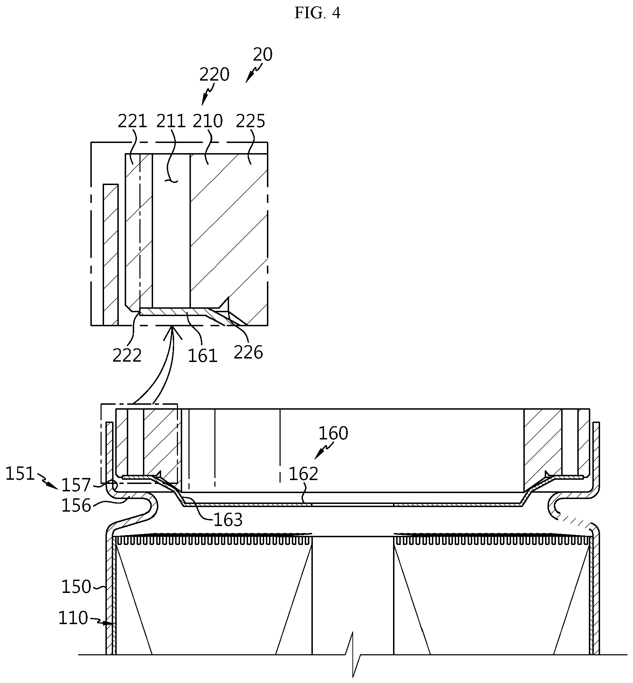

Referring to FIGS. 4 and 5, the main body 210 comes into contact with the collector plate 160 and presses the collector plate 160. Specifically, the main body 210 comes into contact with the first portion 161 of the collector plate 160 and presses the first portion 161 of the collector plate 160. Here, when the main body 210 presses the collector plate 160, the collector plate 160 spaced apart from the battery can 150 moves and comes into contact with the beading portion 151 of the battery can 150. That is, the main body 210 presses the first portion 161 of the collector plate 160 such that the first portion 161 of the collector plate 160 comes into contact with the horizontal portion 156 of the beading portion 151.

Here, the left-right length of the lower side of the main body 210 may be configured to correspond to the left-right length of the first portion 161 of the collector plate 160. The fact that the left-right length of the lower side of the main body 210 corresponds to the left-right length of the first portion 161 of the collector plate 160 indicates that the main body 210 may have various lengths as long as the main body 210 comes into contact with and presses the collector plate 160 and does not necessarily indicate that the left-right length of the lower side of the main body 210 is the same as the left-right length of the first portion 161 of the collector plate 160.

In addition, a through-hole 211 for welding is formed in the main body 210. That is, referring to FIG. 6, a laser beam (see the arrow in FIG. 6) passes through the through-hole 211 of the main body 210 and bonds the first portion 161 of the collector plate 160 to the horizontal portion 156 of the beading portion 151 of the battery can 150.

Referring to FIG. 3, the position determination portion 220 is coupled to at least one of both ends of the main body 210. That is, the position determination portion 220 may be coupled to both ends of the main body 210, or in some cases, may be coupled to only one end of the main body 210. Although the position determination portion 220 may be coupled to the main body 210, it may be manufactured integrally with the main body 210 so as to extend from the main body 210.

The position determination portion 220 may be configured to include, for example, at least one of a first position determination portion 221 coupled to the left side of the main body 210 and a second position determination portion 225 coupled to the right side of the main body 210.

Since the jig 20 is configured to move in the vertical direction, when the first position determination portion 221 and the second position determination portion 225 protrude to the lower portion of the main body 210 and come into contact with both ends of the collector plate 160, respectively, the collector plate 160 may be fixed at a correct position.

For example, referring to FIG. 3, a first protrusion 222 may be formed in the above-described first position determination portion 221 to protrude downward further than the main body 210, and referring to FIG. 4, the first protrusion 222 may be configured to come into contact with the left end of the first portion 161 of the collector plate 160. As described above, if the first protrusion 222 is in contact with the left end of the first portion 161 of the collector plate 160, the collector plate 160 in contact with the first protrusion 222 is unable to move to the left and is fixed.

In this case, if the first position determination portion 221 included in the jig 20 according to an embodiment of the present disclosure and the first protrusion 222 formed in the first position determination portion 221 come into contact with the battery can 150, the battery can 150 may be damaged, so the first position determination portion 221 is spaced apart from the battery can 150, and the first protrusion 222 is also spaced apart from the battery can 150. For example, the thickness of the first protrusion 222 may be configured to be smaller than the thickness of the first portion 161 of the collector plate 160, so that the first protrusion 222 does not come into contact with the beading portion 151, for example, the horizontal portion 156, as shown in FIG. 5.

Referring back to FIG. 3, a second protrusion 226 may be formed in the second position determination portion 225 to protrude downward further than the main body 210, and referring to FIG. 4, the second protrusion 226 may be configured to come into contact with the right end of the first portion 161 of the collector plate 160. In addition, referring to FIG. 5, the second position determination portion 225 may be configured to come into contact with the third portion 163 of the collector plate 160.

As described above, if the second protrusion 226 comes into contact with the right end of the first portion 161 of the collector plate 160 and if the second position determination portion 225 comes into contact with the third portion 163 of the collector plate 160, the collector plate 160 in contact with the second protrusion 226 is fixed without moving to the right.

As described above, when the collector plate 160 is fixed at the correct position without moving to the left and right by the first position determination portion 221 and the second position determination portion 225, welding is performed at the correct position, thereby improving the quality of welding, ultimately preventing defects in the cylindrical battery cell 10 itself, and improving the stability thereof.

Here, at the position where the collector plate 160 is fixed by the first position determination portion 221 and the second position determination portion 225, the center of the collector plate 160 aligns with the center of the electrode assembly 110.

However, in the case where the collector plate 160 is configured to move in any one of the left and right directions, only one of the first position determination portion 221 and the second position determination portion 225 may be provided.

Hereinafter, the configuration and operational effects of the jig 20 used for welding a cylindrical battery cell according to an embodiment of the present disclosure will be described.

The jig 20 used for welding a cylindrical battery cell according to an embodiment of the present disclosure may be used for various types of cylindrical battery cells 10. For example, as cylindrical battery cells 10 are currently applied to electric vehicles, the form factors of cylindrical battery cells 10 are increasing.

Here, the form factor indicates a value representing the diameter and height of the cylindrical battery cell 10. That is, the first two digits of the form factor value indicate the diameter of the cell, the next two digits indicate the height of the cell, and the last digit "0" indicates that the cross-section of the cell is circular. If the height of the cell exceeds 100m, three digits are required to indicate the height, so the last digit may be omitted.

In addition, the diameter and height of the cylindrical battery cell 10 are increasing, compared to the conventional cylindrical battery cells 10 having form factors such as 18650, 21700, and the like. The cylindrical battery cells 10 in which the above-described jig 20 is able to be used may include cylindrical battery cells 10 having increased form factors such as 48750, 48110, 48800, and 46800, as well as the cylindrical battery cells 10 having the conventional form factors.

In the process of manufacturing the cylindrical battery cell 10, the collector plate 160 may be coupled to the beading portion 151 of the battery can 150 by laser welding. In this case, processing errors, design tolerances, or the gap between the battery can 150 and the collector plate 160 due to the round portion 157 formed in the beading portion 151 causes the collector plate 160 to move to the left and right of the beading portion 151. In order to prevent the collector plate 160 from moving as described above and ensure that the center of the collector plate 160 aligns with the center of the electrode assembly 110, the above-described jig 20 may include a main body 210 and a position determination portion 220.

A position determination portion 220 may be coupled to the main body 210, and the position determination portion 220 may be configured to include at least one of a first position determination portion 221 and a second position determination portion 225. A first protrusion 222 may be formed in the first position determination portion 221 to protrude downward further than the main body 210, and the first protrusion 222 may be configured to come into contact with the left end of the first portion 161 of the collector plate 160. **In** addition, a second protrusion 226 may be formed in the second position determination portion 225 to protrude downward further than the main body 210, and the second protrusion 226 may be configured to come into contact with the right end of the first portion 161 of the collector plate 160.

As described above, since the first position determination portion 221 restrains the left end of the collector plate 160 and since the second position determination portion 225 restrains the right end of the collector plate 160, the collector plate 160 is unable to move in the left or right direction and may remain at the correct position during welding. **In** addition, welding is performed while the collector plate 160 is fixed at the correct position, thereby improving welding quality.

Hereinafter, the configuration and operational effects of the cylindrical battery cell manufacturing method using the jig 20 according to an embodiment of the present disclosure will be described, but the above description of the jig 20 used for welding a cylindrical battery cell (hereinafter, simply referred to as a jig 20) according to an embodiment of the present disclosure will be applied to the same configurations below.

In addition, the description of the method of manufacturing a cylindrical battery cell using the jig 20 according to an embodiment of the present disclosure, which is applicable to the jig 20 used for welding a cylindrical battery cell according to an embodiment of the present disclosure described above, may be applied to the above-mentioned jig 20.

Referring to FIG. 2, the first portion 161 of the collector plate 160 is spaced apart from the beading portion 151.

Referring to FIG. 3, the jig 20 is inserted into the battery can 150. The jig 20 may be configured to include a main body 210 having a through-hole 211 formed for welding, and a position determination portion 220 coupled to at least one of both ends of the main body 210. Detailed descriptions of the main body 210 and the position determination portion 220 are replaced with the above descriptions.

Referring to FIG. 4, the main body 210 comes into contact with the other side of the collector plate 160, for example, the first portion 161 of the collector plate 160, to press the first portion 161 of the collector plate 160. Then, as shown in FIG. 5, the first portion 161 of the collector plate 160 comes into contact with the horizontal portion 156 of the beading portion 151.

In this case, the position determination portion 220 (e.g., the first position determination portion 221 or the second position determination portion 225) coupled to the main body 210 may come into contact with the left or right end of the first portion 161 of the collector plate 160 to restrict movement of the collector plate 160 in the left and right directions, so that the collector plate 160 may be fixed at the correct position.

Referring to FIG. 6, a laser is radiated through the through-hole 211 formed in the main body 210, so that the collector plate 160 may be coupled to the beading portion 151 of the battery can 150 by welding.

In addition, if necessary, as shown in FIG. 7, when the collector plate 160 is coupled to the beading portion 151 of the battery can 150, the beading portion 151 may be bent to change in its shape. However, the present disclosure is not limited thereto.

Hereinafter, the configuration and operational effects of a cylindrical battery cell 10 manufactured according to the cylindrical battery cell manufacturing method according to an embodiment of the present disclosure will be described, but the above description of at least one of the jig 20 used for welding a cylindrical battery cell according to an embodiment of the present disclosure and the cylindrical battery cell manufacturing method using the jig 20 according to an embodiment of the present disclosure will be applied to the same configurations below.

In addition, the description of the cylindrical battery cell 10 according to an embodiment of the present disclosure, which is applicable to at least one of the jig 20 used for welding a cylindrical battery cell according to an embodiment of the present disclosure and the cylindrical battery cell manufacturing method using the jig according to an embodiment of the present disclosure, may be applied to the above-mentioned jig 20 or method.

Hereinafter, it should be understood that a cylindrical battery cell 10 below indicates the cylindrical battery cell 10 manufactured according to the cylindrical battery cell manufacturing method according to an embodiment of the present disclosure.

As described above, referring to FIG. 1, the cylindrical battery cell 10 according to an embodiment of the present disclosure may be configured to include an electrode assembly 110, a battery can 150, a collector plate 160, and a cell terminal 199. In addition, the cylindrical battery cell may further include an insulator 170, a cap plate 180, and a sealing gasket 190.

The electrode assembly 110 may include a positive electrode plate 120, a negative electrode plate 130, and a separator 140, and may be configured by winding, in one direction, the positive electrode plate 120 and the negative electrode plate 130 with the separator 140 interposed therebetween.

That is, the electrode assembly 110 may be configured as a jelly roll type in which the long sheet-shaped positive electrode plate 120 and negative electrode plate 130, coated with electrode active materials, are wound while the separator 140 is interposed therebetween.

In this case, the electrode assembly 110 is wound around a core disposed at one end of the electrode assembly 110, and then the core is removed after winding the electrode assembly 110, so that a central opening is formed at the center where the core is removed.

The positive electrode plate 120 has a positive electrode active material layer including a positive electrode active material formed on at least one surface of a positive electrode collector. A positive electrode tab may be attached to the positive electrode plate 120, and the positive electrode tab may be attached to the uncoated region of the positive electrode collector, where the positive electrode active material is not applied, by ultrasonic fusion or the like. However, the present disclosure does not necessarily require the uncoated region, nor is it limited to the attachment method of the positive electrode tab described above, and various tab attachment technologies known at the time of filing the present disclosure may be applied to the present disclosure.

Meanwhile, as the positive electrode collector, a thin metal plate with excellent conductivity, for example, aluminum (Al) foil, may be used, and the positive electrode tab may be made of, for example, aluminum (Al).

The negative electrode plate 130 is formed by applying a negative electrode active material to at least one surface of a negative electrode collector, and a negative electrode tab is attached to the negative electrode plate 130. Like the positive electrode tab, the negative electrode tab may also be attached to the uncoated region of the negative electrode collector, where the negative electrode active material is not applied, by various attachment methods such as ultrasonic fusion.

In addition, like the positive electrode plate 120, the negative electrode plate 130 does not necessarily require the uncoated region, nor is it limited to the attachment method of the negative electrode tab described above, and various tab attachment technologies known at the time of filing the present disclosure may be applied to the present disclosure.

In addition, as the negative electrode collector, a conductive metal plate, for example, copper (Current) or nickel (Ni) foil, may be used, and the negative electrode tab may be made of, for example, nickel (Ni).

The separator 140 may be disposed between the positive electrode plate 120 and the negative electrode plate 130 to insulate the positive electrode plate 120 and the negative electrode plate 130 from each other and cause active material ions to be exchanged between the positive electrode plate 120 and the negative electrode plate 130. Any separator 140 may be used without limitations as long as it is normally used as a separator 140 in a lithium secondary battery.

Specifically, for the separator 140, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof may be used.

In addition, conventional porous nonwoven fabrics, for example, nonwoven fabrics made of high-melting point glass fibers, polyethylene terephthalate fibers, or the like, may be used. In addition, a separator 140 coated with a coating layer including a heat-resistant polymer material such as ceramic or engineering plastic may be used to ensure heat resistance or mechanical strength.

The battery can 150 is formed in a cylindrical shape, has a through-opening, and stores the electrode assembly 110 therein. For example, the battery can 150 may be formed in a cylindrical shape, may store the electrode assembly 110 therein, and may be electrically connected to the negative electrode plate 130 or negative electrode collector plate 160 of the electrode assembly 110. Accordingly, the battery can 150 may have the same polarity as the negative electrode plate 130, that is, a negative electrode. However, the present disclosure is not limited thereto.

Here, the diameter of the battery can 150 is formed to be greater than the diameter of the electrode assembly 110. A gap of a predetermined size may be formed between the battery can 150 and the electrode assembly 110 (between the battery can 150 and the positive electrode collector plate in the case where the positive electrode collector plate is coupled to the electrode assembly 110), and the insulator 170 may be provided in the gap.

The battery can 150 may be made of, for example, a conductive material such as metal. Although the battery can 150 may be made of a conductive metal, such as aluminum, steel, or stainless steel, it is not limited thereto.

The cell terminal 199 may be made of a conductive metal material and coupled to the through-opening formed in the battery can 150 so as to be electrically connected to the positive electrode collector plate through the through-opening. In addition, the cell terminal 199 is electrically connected to the positive electrode plate 120 of the electrode assembly 110 through the positive electrode collector plate, thereby having positive polarity. That is, the cell terminal 199 may function as a positive electrode terminal.

Meanwhile, referring to FIG. 1, a crimping portion 152 may be formed adjacent to the above-described beading portion 151. The crimping portion 152 extends and bends toward the inside of the battery can 150 to surround and fix the edge of the cap plate 180 together with the sealing gasket 190.

Here, the crimping portion 152 is formed in the upper portion of the battery can 150, based on the arrangement of the battery can 150 in FIG. 1. For example, in the case where the battery can 150 is configured such that the cell terminal 199 is located at the bottom as shown in FIG. 1, the crimping portion 152 is formed in the upper portion of the battery can 150 in FIG. 1. In addition, as shown in FIG. 1, the crimping portion 152 is formed above the beading portion 151. Here, the crimping portion 152 is configured to extend and bend to surround the edge of the cap plate 180 disposed above the beading portion 151. However, in the case where the battery can 150 is disposed upside down in FIG. 1, the crimping portion 152 is formed in the lower portion of the battery can 150.

The cap plate 180 is configured to seal the opening of the battery can 150. The cap plate 180 may be made of, for example, a metal material to secure rigidity. The cap plate 180 may be separated from the electrode assembly 110 so as to have no polarity. That is, the cap plate 180 may not have polarity even if it is made of a conductive metal material. The fact that the cap plate 180 does not have polarity denotes that the cap plate 180 is electrically insulated from the battery can 150 and the cell terminal 199. As described above, the cap plate 180 does not need to have polarity, and is not necessarily made of a conductive metal.

The cap plate 180 may be seated and supported on the beading portion 151 formed in the battery can 150. In addition, the cap plate 180 is fixed by the crimping portion 152. The sealing gasket 190 may be interposed between the cap plate 180 and the crimping portion 152 of the battery can 150 to ensure airtightness of the battery can 150. That is, the sealing gasket 190 may be provided to be interposed between the edge of the cap plate 180 and the opening of the battery can 150.

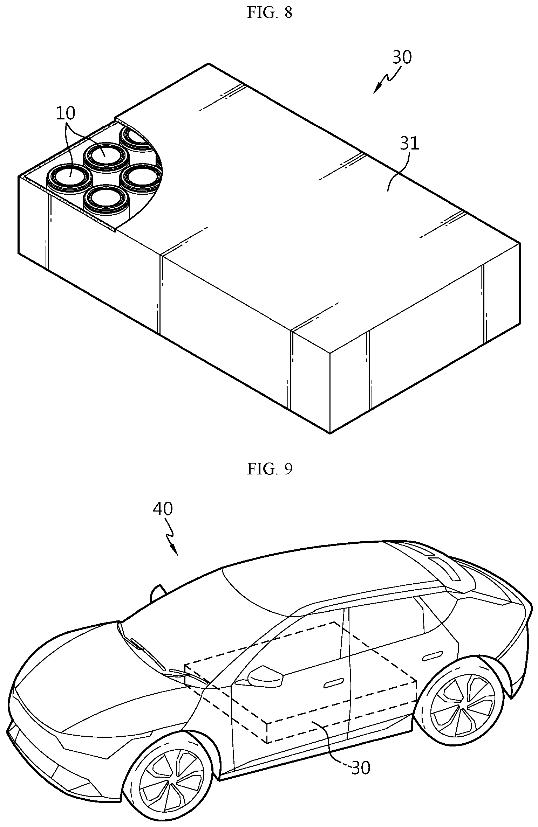

FIG. 8 is a diagram schematically illustrating the configuration of a battery pack according to an embodiment of the present disclosure, and FIG. 9 is a diagram illustrating a vehicle including the battery pack in FIG. 8.

Referring to FIG. 8, a battery pack 30 according to an embodiment of the present disclosure may include one or more cylindrical battery cells 10 according to an embodiment of the present disclosure described above. In addition, the battery pack 30 may further include a pack housing 31 for storing the cylindrical battery cell 10 and various devices for controlling charging and discharging of the cylindrical battery cell 10, such as a BMS, a current sensor, a fuse, or the like.

Referring to FIG. 9, a vehicle 40 according to an embodiment of the present disclosure may include the above-described cylindrical battery cell 10 or battery pack 30. In addition, the cylindrical battery cell 10 or battery pack 30 according to an embodiment of the present disclosure may be applied to a vehicle 40, for example, a vehicle configured to use electricity, such as an electric vehicle or a hybrid vehicle.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

### Industrial Applicability

The present disclosure relates to a jig used for welding a cylindrical battery cell, a method of manufacturing a cylindrical battery cell using the same, a cylindrical battery cell manufactured thereby, and a battery pack and vehicle including the cylindrical battery cell, and in particular, it may be used in secondary battery-related industries.

## Claims

1. A jig used for welding a cylindrical battery cell, which is a jig for welding a collector plate electrically connected to an electrode assembly of a cylindrical battery cell to a battery can, the jig comprising:
a main body configured to come into contact with the collector plate to press the collector plate and having a through-hole for welding; and
a position determination portion coupled to at least one of both ends of the main body to come into contact with an end of the collector plate, and configured to cause the collector plate to be fixed at a correct position during welding.

2. The jig used for welding a cylindrical battery cell according to claim 1,
wherein the battery can comprises a beading portion formed to be compressed inward,
wherein the collector plate comprises a first portion in contact with the beading portion, a second portion in contact with the electrode assembly, and a third portion connecting the first portion and the second portion, and
wherein the main body presses the first portion of the collector plate such that the first portion of the collector plate comes into contact with the beading portion.

3. The jig used for welding a cylindrical battery cell according to claim 2,
wherein a left-right length of a lower side of the main body is configured to correspond to a left-right length of the first portion of the collector plate.

4. The jig used for welding a cylindrical battery cell according to claim 2,
wherein the position determination portion comprises at least one of a first position determination portion coupled to the left side of the main body and a second position determination portion coupled to the right side of the main body.

5. The jig used for welding a cylindrical battery cell according to claim 4,
wherein a first protrusion is formed in the first position determination portion so as to protrude downward further than the main body, and
wherein the first protrusion comes into contact with the left end of the first portion of the collector plate.

6. The jig used for welding a cylindrical battery cell according to claim 5,
wherein the first position determination portion and the first protrusion formed in the first position determination portion are spaced apart from the battery can.

7. The jig used for welding a cylindrical battery cell according to claim 4,
wherein a second protrusion is formed in the second position determination portion so as to protrude downward further than the main body, and
wherein the second protrusion comes into contact with the right end of the first portion of the collector plate.

8. The jig used for welding a cylindrical battery cell according to claim 7,
wherein the second position determination portion comes into contact with the third portion of the collector plate.

9. The jig used for welding a cylindrical battery cell according to claim 2,
wherein the beading portion comprises a horizontal portion formed horizontally, and
wherein welding is performed while the first portion of the collector plate is seated on the horizontal portion of the beading portion.

10. The jig used for welding a cylindrical battery cell according to claim 2,
wherein a round portion in a curved shape is formed in at least a portion of the beading portion.

11. A method of manufacturing a cylindrical battery cell using a jig, the method comprising:
pressing a collector plate using a jig used for welding a cylindrical battery cell of any one of claims 1 to 10 such that the collector plate comes into contact with the battery can;
fixing the collector plate at a correct position by the jig; and
welding the collector plate to the battery can through the jig.

12. The method of manufacturing a cylindrical battery cell according to claim 11,
wherein the jig comprises: a main body having a through-hole for welding; and a position determination portion coupled to at least one of both ends of the main body,
comprising:
causing the main body to come into contact with the collector plate to press the collector plate; and
causing the position determination portion to come into contact with an end of the collector plate so that the collector plate is fixed at a correct position during welding.

13. A cylindrical battery cell manufactured by the method of manufacturing a cylindrical battery cell of claim 11.

14. A battery pack comprising the cylindrical battery cell of claim 13.

15. A vehicle comprising the cylindrical battery cell of claim 13.
